# EUROPEAN PATENT APPLICATION

(11) **EP 3 957 688 A1**
(43) Date of publication of application: **23.02.2022**
(21) Application number: 20791325.2
(22) Date of filing: 11.03.2020
(51) Int. Cl.: C08L 83/04, C08K 5/5425, C08L 83/05, C08L 83/07, C09K 5/14, H01M 2/10, H01M 10/613, H01M 10/625, H01M 10/651, H01M 10/653, H01M 10/6567

(54) **HEAT-CONDUCTIVE COMPOSITION, HEAT-CONDUCTIVE MEMBER, AND BATTERY MODULE**

(30) Priority: 15.04.2019 JP 2019076830
(71) Applicant: Sekisui Polymatech Co., Ltd., Saitama-city, Saitama 338-0837 (JP)
(72) Inventor: UMETANI, Hiroshi, Saitama-city, Saitama 338-0837 (JP); ISHIDA, Keita, Saitama-city, Saitama 338-0837 (JP)
(74) Representative: Ter Meer Steinmeister & Partner
(86) International application number: PCT/JP2020/010511
(87) International publication number: WO 2020/213306

(57) **Abstract**

Provided is a thermally conductive member that has excellent adhesion and does not easily peel off from an adherend even when vibration or the like is repeatedly applied.

A thermally conductive composition containing a curable organopolysiloxane (A), an alkoxysilane compound (B), and a thermally conductive filler (C), in which the alkoxysilane compound (B) is an alkoxysilane containing long-chain alkenyl group.

## Description

### Technical Field

The present invention relates to a thermally conductive composition, a thermally conductive member, and a battery module in which the thermally conductive member is used as a gap filler.

### Background Art

A cured product formed by loading a curable liquid thermally conductive composition into a space between a heating element and a heat sink and then curing the thermally conductive composition is being used as a thermally conductive member that transfers heat generated from the heating element to the heat sink. The curable liquid thermally conductive composition is fluid and thus can be used to fill an arbitrary gap between the heating element and the heat sink. Therefore, a cured product to be formed can be used to reliably fill a gap between a heating element and a heat sink even when the gap is not constant and is used as a thermally conductive gap filler. When made to adhere to the surface of a heating element and the surface of a heat sink, a thermally conductive gap filler is capable of exhibiting a favorable thermally conductive property.

It is known that a thermally conductive gap filler is used in battery modules as disclosed in, for example, Patent Literature 1. A gap filler in a battery module is disposed between a battery cell, which is a heating element, and a module housing, which is a heat sink, and plays a role of radiating heat from the battery cell to the outside. In addition, the gap filler is also used to hold battery cells in an isolated state by being disposed between a battery cell and another battery cell to fix the battery cells.

### Citation List

### Patent Literature

PTL1: International Publication No. WO 2018/173860

### Summary of Invention

### Technical Problem

In order to increase the thermal conduction efficiency or fix battery cells, it is necessary to make a thermally conductive gap filler adhere to a heating element such as a battery cell or a heat sink such as a module housing with a strong adhesive force. In addition, in some cases, a gap filler is used in a battery module for application where vibration is applied, for example, an automobile.

However, for conventional thermally conductive members, it is difficult to sufficiently increase the adhesion, and, when vibration or the like is applied, a disadvantage of peeling or the like at the interface with an adherend is likely to occur.

The present invention has been made in consideration of the above-described circumstances, and an object of the present invention is to provide a thermally conductive member that has excellent adhesion and does not easily peel off from an adherend even when vibration or the like is repeatedly applied and a thermally conductive composition for forming the thermally conductive member.

### Solution to Problem

As a result of intensive studies, the present inventors found that the above-described problem can be solved by adding a specific silane compound as a silane coupling agent to a thermally conductive composition and completed the present invention. The present invention provides the following [1] to [10].
[1] A thermally conductive composition containing a curable organopolysiloxane (A), an alkoxysilane compound (B), and a thermally conductive filler (C), in which the alkoxysilane compound (B) is an alkoxysilane containing long-chain alkenyl group having 8 to 18 carbon atoms.
[2] A thermally conductive composition of a two-component type obtained by combining a first agent and a second agent, in which the first agent contains an alkenyl group-containing organopolysiloxane (A1), an alkoxysilane compound (B), and an addition reaction catalyst (X), the second agent contains a hydrogen organopolysiloxane (A2), but contains no alkoxysilane compound (B), at least any one of the first agent and the second agent contains a thermally conductive filler (C), and the alkoxysilane compound (B) is an alkoxysilane containing long-chain alkenyl group having 8 to 18 carbon atoms.
[3] The thermally conductive composition according to [2], in which the second agent contains the alkenyl group-containing organopolysiloxane (A1).
[4] The thermally conductive composition according to [1], in which the curable organopolysiloxane (A) is an addition reaction curable organopolysiloxane.
[5] The thermally conductive composition according to any one of [1] to [4], in which a cured product of the thermally conductive composition has a hardness of 30 or higher and lower than 60 in terms of A hardness.
[6] The thermally conductive composition according to any one of [1] to [5], in which the alkoxysilane compound (B) is octenyltrimethoxysilane.
[7] The thermally conductive composition according to any one of [1] to [6], in which a content of the alkoxysilane compound (B) is 1 to 10 mass% with respect to a total mass of the curable organopolysiloxane (A) and the alkoxysilane compound (B).
[8] The thermally conductive composition according to any one of [1] to [7], in which a tensile shear strength is 1 MPa or higher when the thermally conductive composition has been cured.
[9] A thermally conductive member obtained by curing the thermally conductive composition according to any one of [1] to [8].
[10] A battery module including a gap filler made of the thermally conductive member according to [9], a plurality of battery cells, and a module housing configured to store the plurality of battery cells, in which the gap filler is disposed within the module housing.

### Advantageous Effects of Invention

According to the present invention, it is possible to provide a thermally conductive member that has an excellent adhesive force to an adherend and does not easily peel off even when an external force such as vibration is applied and a thermally conductive composition for forming the thermally conductive member.

### Brief Description of Drawings

[Fig. 1] Fig. 1 is a perspective view showing a typical configuration of a battery module according to the present invention.
[Fig. 2] Fig. 2 is a perspective view showing a typical configuration of a battery cell in the battery module.

### Description of Embodiment

Hereinafter, a thermally conductive composition, a thermally conductive member being a cured product of the thermally conductive composition, and a battery module of the present invention will be described using an embodiment.

### [Thermally conductive composition]

The thermally conductive composition of the present invention is a thermally conductive composition containing a curable organopolysiloxane (A), an alkoxysilane compound (B), and a thermally conductive filler (C). Hereinafter, each component will be described in detail.

### <Curable organopolysiloxane (A)>

The curable organopolysiloxane (A) is a curable organopolysiloxane and includes an organopolysiloxane having a reactive group. Examples of the curable organopolysiloxane include an addition reaction curable silicone, a radical reaction curable silicone, a condensation reaction curable silicone, an ultraviolet or electron beam curable silicone, and a moisture curable silicone, and, among these, the curable organopolysiloxane is preferably the addition reaction curable silicone. The adhesive force of the addition reaction curable organopolysiloxane to metal such as aluminum is likely to become low; however, in the present invention, the adhesive force to aluminum or the like is also made high by using a specific alkoxysilane compound (B) as described below.

As the addition reaction curable organopolysiloxane, more preferable is an addition reaction curable organopolysiloxane containing an alkenyl group-containing organopolysiloxane (base resin, A1) and a hydrogen organopolysiloxane (curing agent, A2). The alkenyl group-containing organopolysiloxane (A1) is preferably a vinyl-terminated organopolysiloxane having a vinyl group (CH₂=CH-) at the terminal.

The curable organopolysiloxane (A) turns into silicone rubber by being cured, and, in the case of the addition reaction curable organopolysiloxane, the curable organopolysiloxane may be cured by an addition reaction between the base resin and the curing agent using an addition reaction catalyst (X). The addition reaction catalyst (X) is preferably a platinum catalyst.

One kind of the curable organopolysiloxane (A) may be used singly or two or more kinds thereof may be jointly used.

### <Alkoxysilane compound (B)>

The alkoxysilane compound (B) is an alkoxysilane containing long-chain alkenyl group. The long-chain alkenyl group in the alkoxysilane compound (B) is an alkenyl group having 8 or more carbon atoms and, more specifically, an alkenyl group having 8 to 18 carbon atoms.

The thermally conductive composition of the present invention contains the specific alkoxysilane compound (B), which makes it difficult for peeling or the like to occur even when an external force such as vibration is applied while ensuring excellent adhesion to metal or the like. A principle thereof is not clear, but assumed as follows. Since the alkoxysilane compound (B) contains an alkoxysilane containing long-chain alkenyl group and an alkoxy group, a cured product of the thermally conductive composition of the present invention becomes favorable not only in adhesion to an adherend but also in the strength and flexibility of the cured product itself. Therefore, it is assumed that the cured product of the thermally conductive composition has a high tensile shear strength and becomes displaceable to a certain extent when an external force is applied thereto, whereby the cured product does not easily peel off or the like even when an external force such as vibration is applied while ensuring excellent adhesion to an adherend.

In the present invention, the cured product of the thermally conductive composition improves in adhesion to an adherend, and, regarding the failure mode, cohesive fracture becomes dominant over interfacial peeling. Therefore, the cured product of the thermally conductive composition improves not only adhesion but also the strength and flexibility of the cured product itself and thus becomes capable of firmly holding an adherend, for example.

The alkoxysilane containing long-chain alkenyl group is specifically represented by General Formula (1) below.

R¹-Si(R²)₃₋ₐ(OR³)ₐ (1)

In the General Formula (1), R¹ represents an alkenyl group having 8 to 18 carbon atoms. R²s are each independently an alkyl group having one to four carbon atoms, R³s are each independently an alkyl group having one to four carbon atoms, and a is an integer of one to three.

R² is preferably a methyl group or an ethyl group and more preferably a methyl group. R³ is preferably a methyl group or an ethyl group and more preferably a methyl group. a is one to three and preferably three. Therefore, the compound (B) is preferably alkenyltriethoxysilane or alkenyltrimethoxysilane and more preferably alkenyltrimethoxysilane.

The long-chain alkenyl group (that is, R¹ in General Formula (1)) in the alkenyl group-containing alkoxysilane may be linear or branched, but is preferably linear. The long-chain alkenyl group preferably has a vinyl group (CH₂=CH-) at the terminal, and it is more preferable that the terminal of a linear chain is a vinyl group. The number of carbon atoms in the long-chain alkenyl group (that is, R¹ in General Formula (1)) is more preferably 8 to 12, still more preferably 8 to 10, and most preferably 8.

As the alkoxysilane containing long-chain alkenyl group, specifically, octenyltrimethoxysilane can be preferably used, and, particularly, 7-octenyltrimethoxysilane is preferably used.

One kind of the alkoxysilane compound (B) may be used singly or two or more kinds thereof may be jointly used.

The content of the alkoxysilane compound (B) in the thermally conductive composition of the present invention is preferably within a range of 1 to 10 mass% with respect to the total amount of the curable organopolysiloxane (A) and the alkoxysilane compound (B). When the content is set to 1 mass% or more, the peeling stress of the cured product of the thermally conductive composition becomes high, and the adhesion to an adherend becomes favorable. In addition, the displacement amount when an external force is applied becomes large, and the cured product is unlikely to peel off even when vibration or the like is applied. On the other hand, when the content is set to 10 mass% or less, it becomes possible to contain an appropriate amount of the curable organopolysiloxane (A) in the composition, and it becomes easy to obtain favorable characteristics as silicone rubber.

The content of the alkoxysilane compound (B) is more preferably 2 mass% or more and still more preferably 2.5 mass% or more. When the content is set to the above-described content or more, particularly, the tensile shear strength becomes high, and it is possible to prevent the peeling or failure of the cured product itself even when vibration or the like is applied. In addition, the content of the alkoxysilane compound (B) is more preferably 7 mass% or less and still more preferably 5 mass% or less from the viewpoint of improving a variety of performances in a well-balanced manner.

### <Thermally conductive filler (C)>

The thermally conductive filler (C) is a material that imparts a thermally conductive property to a cured product of the thermally conductive composition, and a material that can be used therefor is a filler having an excellent electrical insulating property and a favorable thermally conductive property. For example, aluminum oxide, boron nitride, aluminum nitride, silicon carbide, aluminum hydroxide, or the like is preferable since the electrical insulating property or thermally conductive property is excellent. The particles thereof may have a shape such as a spherical shape, a fibrous shape, a needle shape, or a scale shape. One kind of the thermally conductive filler may be used singly or two or more kinds thereof may be jointly used. Among the above-described thermally conductive fillers, one or more selected from the group consisting of aluminum oxide and aluminum hydroxide is more preferable, and both aluminum oxide and aluminum hydroxide are still more preferably used.

In the fluid thermally conductive composition, irregular fine particle-shaped aluminum hydroxide is capable of suppressing separation of a liquid silicone and the thermally conductive filler. In addition, aluminum oxide has a high thermally conductive property, can be used as particles having large particle diameters, and is capable of effectively increasing thermal conductivity in the cured product of the thermally conductive composition.

For example, when aluminum oxide and aluminum hydroxide are used as the thermally conductive filler (C), the shape of the aluminum oxide is preferably a spherical shape. When the aluminum oxide has a spherical shape, it is easy to decrease the specific surface area. Particularly, in a case where aluminum hydroxide and aluminum oxide are collectively used as the thermally conductive filler, when the specific surface area is small, the fluidity of the liquid thermally conductive composition does not easily deteriorate even when the proportion of aluminum oxide having a large particle diameter is increased.

The content of the thermally conductive filler (C) in the thermally conductive composition can be selected to be, for example, within a range of 100 to 1500 parts by mass and preferably within a range of 800 to 1200 parts by mass with respect to 100 parts by mass of the total amount of the components (A) and (B). When the content of the thermally conductive filler is set to 100 parts by mass or more, the thermally conductive property of the thermally conductive member becomes favorable. In addition, when the content is set to 1500 parts by mass or less, the viscosity of the thermally conductive composition becomes appropriate, and the handleability during filling becomes favorable.

The thermally conductive composition is ordinarily in a liquid form, and the viscosity at 25°C is preferably selected from a range of 50 to 2000 Pa·s. When the viscosity is set to 50 Pa·s or higher, the content of the thermally conductive filler becomes sufficient, and a sufficient thermal conductivity can be obtained in a cured product to be produced. On the other hand, when the viscosity is set to 2000 Pa·s or lower, it is possible to prevent the content of the thermally conductive filler from becoming higher than necessary, it becomes easy to dispense or the like the thermally conductive composition, and workability becomes favorable. In addition, from the viewpoint of improving the balance between satisfaction of a desired thermal conductivity and discharge stability during dispensing, the content of the thermally conductive filler is adjusted, and the viscosity is more preferably set to a range of 100 to 1000 Pa·s and particularly preferably set to a range of 200 to 600 Pa·s. The viscosity of the thermally conductive composition is a viscosity when curing does not proceed, and, for example, in a two-component thermally conductive composition described below, the viscosity may be measured immediately after a second agent is mixed into a first agent.

In the thermally conductive composition of the present invention, in addition to the thermally conductive filler, a variety of additives can be contained. Examples thereof include a catalyst, a dispersant, a fire retardant, a plasticizer, a curing retardant, an antioxidant, a colorant, and the like.

The form of the thermally conductive composition of the present invention may be any of a one-component type or a two-component type in which a first agent and a second agent are combined together. The two-component type refers to a form in which the first agent and the second agent are mixed to obtain a thermally conductive composition at the time of using the thermally conductive composition. As the one-component thermally conductive composition, a thermally conductive composition containing a moisture curable silicone as the component (A) is exemplified. As the two-component thermally conductive composition, a composition containing an addition reaction curable silicone as the component (A) is exemplified. Between these, the two-component type is preferable from the viewpoint of storage stability.

In the two-component type thermally conductive composition, a mass ratio of the second agent to the first agent (second agent/first agent) is preferably one or a value close to one, specifically, preferably 0.9 to 1.1 and more preferably 0.95 to 1.05. When the mass ratio of the second agent to the first agent is set to one or a value close to one as described above, it becomes easy to prepare the thermally conductive composition. In addition, in the two-component type thermally conductive composition, a viscosity ratio of the second agent to the first agent (second agent/first agent) is preferably one or a value close to one, specifically, preferably 0.5 to 2.0 and more preferably 0.8 to 1.2. When the viscosity ratio of the second agent to the first agent is set to one or a value close to one as described above, it becomes easy to uniformly mix the thermally conductive composition. A method for adjusting the mass ratio or the viscosity ratio will be described below.

The two-component thermally conductive composition is more specifically a thermally conductive composition in which the first agent contains an alkenyl group-containing organopolysiloxane (A1) (base resin) and the second agent contains a hydrogen organopolysiloxane (A2) (curing agent). In addition, in an embodiment of the two-component thermally conductive composition, the alkoxysilane compound (B) and the addition reaction catalyst (X) are contained in the first agent, but the alkoxysilane compound (B) is not contained in the second agent.

In an ordinary addition reaction-type two-component silicon resin composition, the addition reaction catalyst (X) is contained in the first agent, which contains the base resin; however, in the present embodiment, not only the addition reaction catalyst (X) but also the alkoxysilane compound (B) are contained in the first agent. When not only the addition reaction catalyst (X) but also the alkoxysilane compound (B) are contained in the first agent as described above, curing proceeds appropriately even after the thermally conductive composition is stored for a long period of time, and it is possible to improve a variety of physical properties of a thermally conductive member that is obtained by curing.

The reason therefor is not clear, but is assumed to be because the addition reaction catalyst (X) such as a platinum catalyst gets into a state of being coordinated to the alkenyl groups, which are addition reaction portions of the components (A1) and (B), and curing easily proceeds. Incidentally, it is assumed to be because, before the mixing of the first agent and the second agent, the alkoxysilane compound (B) is not allowed to come into contact with the hydrogen organopolysiloxane (A2), which is a curing agent, which prevents the reaction or the like between the alkoxysilane compound (B) and the hydrogen organopolysiloxane (A2).

In addition, in the embodiment, the thermally conductive filler (C) may be contained in at least any one of the first agent and the second agent, but is preferably contained in both the first agent and the second agent. When the thermally conductive filler (C) is contained in both the first agent and the second agent, it becomes easy to mix the first agent and the second agent. In addition, since it is possible to set the mass ratio and viscosity ratio of the second agent to the first agent to one or a value close to one at the time of producing the thermally conductive composition, it becomes easy to use the thermally conductive composition in a two-component type.

Additionally, the second agent preferably contains the alkenyl group-containing organopolysiloxane (A1). When the second agent contains not only the curing agent (A2) but also the base resin (A1), it becomes easy to adjust the mass ratio and viscosity ratio of the second agent to the first agent to one or a value close to one at the time of producing the thermally conductive composition. On the other hand, the first agent needs not to contain the hydrogen organopolysiloxane (A2), which is a curing agent. In such a case, it is possible to make the masses and viscosities of the curable organopolysiloxane that is contained in the first agent and the curable organopolysiloxane that is contained in the second agent close to each other. Therefore, when thermally conductive compositions each having substantially the same amount are added, it is possible to set the mass ratio and viscosity ratio of the second agent to the first agent to one or a value close to one, and it becomes easy to use the thermally conductive compositions in a two-component type.

In addition, it is preferable that the first agent contains an addition reaction catalyst and the second agent contains substantially no addition reaction catalyst. In such a case, before the mixing of the first agent and the second agent, the storage stability is excellent, and, after the mixing, the reaction is catalyzed, which enables the thermally conductive composition to rapidly cure.

In the case of adopting a form in which the second agent contains not only the curing agent (A2) but also the base resin (A1) and a small amount of the addition reaction catalyst, it is also possible to achieve a state where the addition reaction catalyst is substantially not contained by adding a curing retardant and offsetting the effect of reaction promotion by the addition reaction catalyst that has been added to the second agent for catalyzing reactions at normal temperature in order to prevent addition reaction curing during storage.

Specifically, when a small amount of an addition reaction catalyst is contained in the second agent of the addition reaction-type two-component thermally conductive composition, it is possible to add a curing retardant in order to suppress a reaction between the curing agent (A2) and the base resin (A1) by the addition reaction catalyst during storage. As the curing retardant, for example, an alcohol derivative having a carbon-carbon triple bond such as 3-methyl-1-butyne-3-ol, 3,5-dimethyl-1-hexyn-3-ol, phenylbutynol or 1-ethynyl-1-cyclohexanol; an enyne compound such as 3-methyl-3-pentene-1-in or 3,5-dimethyl-3-hexene-1-in; an alkenyl group-containing low-molecular-weight siloxane such as tetramethyltetravinylcyclotetrasiloxane or tetramethyltetrahexenylcyclotetrasiloxane; or an alkyne-containing silane such as methyl-tris(3-methyl-1-butyne-3-oxy)silane or vinyl-tris(3-methyl-1-butyne-3-oxy)silane is exemplified.

In addition, even in the case of containing no curing retardant, the second agent may contain an addition reaction catalyst to an extent that reactions are not catalyzed at normal temperature.

The platinum catalyst, for example, chloroplatinic acid or a complex compound of chloroplatinic acid and olefin, vinylsiloxane or an acetylene compound, which is used as the addition reaction catalyst, has an activation function of acting on the curing agent (A2) to enhance the reactiveness of the curing agent (A2). The most effective means for avoiding unnecessary activation of the curing agent (A2) during the storage of the second agent is to contain no addition reaction catalyst in the second agent.

The curing temperature of the thermally conductive composition may be selected depending on the kind and amount blended of the hydrogen organopolysiloxane, which is used as a curing agent, and the kind and amount added of the addition reaction catalyst to be added. For example, as the two-component type, a form in which the thermally conductive composition is cured simply by mixing the first agent and the second agent and leaving the mixture to stand at normal temperature may be adopted, but it is also possible to select a form in which curing is accelerated by heating.

The tensile shear strength when the thermally conductive composition has cured is preferably 1 MPa or higher. When the tensile shear strength is 1 MPa or higher, the peeling stress of the cured product of the thermally conductive composition with respect to an adherend becomes favorable, and the strength of the cured product itself also becomes high. Therefore, when the thermally conductive composition is used as, for example, a gap filler in a battery module described below, the gap filler becomes excellent in terms of adhesion between the gap filler and a battery cell and adhesion between the gap filler and a module housing. In addition, it is possible to stably hold battery cells in the battery module and to suppress deviation of the fixing positions of the battery cells even when vibration is applied. From this viewpoint, the tensile shear strength of the thermally conductive composition is more preferably 1.5 MPa or higher and still more preferably 1.9 MPa or higher. In addition, the upper limit of the tensile shear strength is not particularly limited and is, for example, 5 MPa or lower.

The tensile shear strength when the thermally conductive composition has been cured can be obtained by fixing two aluminum sheets with the cured product of the thermally conductive composition and measuring the tensile shear strength in accordance with the tensile shear test of JIS K 6850: 1999. Specifically, the tensile shear strength may be measured by a method in examples described below.

### [Thermally conductive member]

A thermally conductive member can be formed by curing the thermally conductive composition of the present invention. The hardness of the thermally conductive member (that is, a cured product of the thermally conductive composition) is, for example, 20 to 80, preferably within a range of 30 to 80 and more preferably in a range of 30 or more and lower than 60 in terms of a value that is measured with a type A hardness meter of JIS K 6253 (hereinafter, referred to as "A hardness").

When the A hardness is set to 80 or lower, it is possible to sufficiently ensure flexibility, which allows the thermally conductive member to favorably follow the shape of a heating element or a heat sink, and adhesion to the heating element or the heat sink. Furthermore, when the A hardness is lower than 60, the displacement amount when an external force is applied becomes large, and it is possible to prevent the peeling from an adherend or rupture of the thermally conductive member even when vibration is applied. Therefore, when the thermally conductive member is used as, for example, a gap filler in a battery module described below, the property of holding battery cells with the gap filler further improves. In addition, when the A hardness is set to 30 or higher, it becomes easy to increase the tensile shear strength.

The thermal conductivity of the thermally conductive member (that is, a cured product of the thermally conductive composition) is preferably 2.5 W/m·K or higher and more preferably 3.0 W/m·K or higher. When the thermal conductivity is set to this lower limit value or higher, the thermally conductive property becomes favorable. Therefore, in a case where the thermally conductive member is used as, for example, a gap filler in a battery module, it is possible to efficiently transfer heat generated from battery cells to a module housing through the gap filler and to suppress an excessive increase in the temperature of the battery cells. The thermal conductivity of the thermally conductive member is preferably as high as possible, but practically, for example, 7 W/m·K or lower.

### [Battery module]

A battery module according to the present invention includes a plurality of battery cells, a module housing configured to store the plurality of battery cells, and a gap filler disposed within the module housing. The gap filler disposed within the module housing is the above-described thermally conductive member of the present invention.

The gap filler that is the thermally conductive member is loaded into a space between the battery cells and a space between the battery cell and the module housing, and the gap filler loaded into the spaces adheres to the battery cells and the module housing. Therefore, the gap filler between the battery cells has a function of holding an isolated state between the battery cells. In addition, the gap filler between the battery cell and the module housing adheres to both the battery cell and the module housing and has a function of transferring heat generated from the battery cell to the module housing.

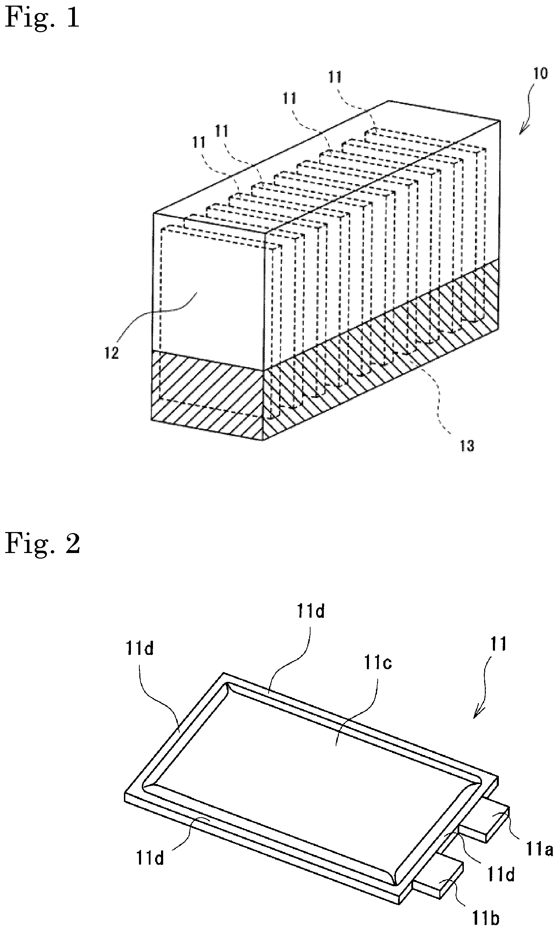

Fig. 1 shows a specific configuration of the battery module. Fig. 2 shows a specific configuration of each battery cell. As shown in Fig. 1, a plurality of battery cells 11 is disposed within a battery module 10. Each battery cell 11 is laminated and sealed in a flexible exterior film and has an overall shape of a flat body in which the thickness is thin compared with the magnitude of the height or the width. In such a battery cell 11, as shown in Fig. 2, a positive electrode 11a and a negative electrode 11b appear outside, and a central portion 11c of the flat surface is formed to be thicker than compressed end portions 11d.

As shown in Fig. 1, individual battery cells 11 are disposed such that the flat surfaces thereof face each other. In the configuration of Fig. 1, a gap filler 13 is not loaded such that the plurality of battery cells 11, which is stored in a module housing 12, are fully covered. The gap filler 13 is loaded so as to fill gaps present in a part (bottom-side part) of the inside of the module housing 12. The gap filler 13 is loaded into the spaces between the battery cells 11 and the spaces between the battery cell 11 and the module housing 12 and adheres to the surfaces of the battery cells 11 and the inner surfaces of the module housing 12 in this part.

The gap filler 13 loaded into the space between the battery cells 11 adheres to the surfaces of both battery cells 11, but the gap filler 13 itself has the above-described hardness and thereby has appropriate elasticity and flexibility, which makes it possible to mitigate stress deformation caused by an external force that displaces the interval between the battery cells 11 even when the external force is applied. Therefore, the gap filler 13 has a function of holding an isolated state between the battery cells 11A.

The gap filler 13 loaded into the gap between the battery cell 11 and the inner surface of the module housing 12 also closely adheres to the surfaces of the battery cell 11 and the inner surface of the module housing 12. As a result, heat that is generated in the battery cell 11 is transferred through the gap filler 13 adhering to the surface of the battery cell 11 to the inner surface of the module housing 12 closely adhering to the other surface of the gap filler 13.

The gap filler 13 may be formed in the battery module 10 by applying the liquid thermally conductive composition using an ordinary dispenser and then curing the liquid thermally conductive composition. At this time, the two-component thermally conductive composition is preferably used as described above. The two-component type is easy to store, is unlikely to cure during operation of applying the two-component thermally conductive composition with a dispenser if the first agent and the second agent are mixed together immediately before the use of the two-component thermally conductive composition, and can be rapidly cured after the application. In addition, application with a dispenser is preferable since it is possible to load the liquid thermally conductive composition relatively deep into the housing 12 of the battery module 10.

The gap filler 13 that covers the battery cells 11 preferably covers 20% to 40% of each battery cell 11 on one side of the battery cell 11. When the gap filler 13 is set to cover 20% or more of each battery cell 11, it is possible to stably hold the battery cell 11. In addition, the battery cell generating a large amount of heat is sufficiently covered, whereby the heat radiation efficiency becomes favorable. When the gap filler 13 is set to cover 40% or less of each battery cell 11, it is possible to efficiently radiate heat that is generated from the battery cell 11, and an increase in the weight, the deterioration of workability, or the like is also prevented. In addition, in order to improve the heat radiation efficiency, it is preferable to cover the side of the battery cell 11 on which the electrodes 11a and 11b are present with the gap filler 13, and it is more preferable to fully cover the electrodes 11a and 11b with the gap filler 13.

As described above, the battery module 10 is capable of releasing heat generated from the battery cells 11 to the module housing 12 through the gap filler 13. In addition, since the thermally conductive member of the present invention is used as the gap filler 13, adhesion to the battery cell 11 or the module housing 12 becomes favorable. Particularly, in some cases, aluminum is the surface material of the battery cell 11 or an aluminum sheet is used as the module housing 12, and, in such cases, the adhesive force becomes much higher.

The thermally conductive member (silicone rubber) of the present invention is elastic, and the hardness is 20 to 80, preferably within a range of 30 to 80, and more preferably in a range of 30 or higher and lower than 60 in terms of, for example, the A hardness, which is relatively low compared with epoxy-based or urethane-based materials. Furthermore, the thermally conductive member of the present invention has a high tensile shear strength and is thus easily displaced in a case where an external force is applied as described above. Therefore, even in the case of receiving vibration or impact when, for example, an automobile starts, stops, or runs, the thermally conductive member of the present invention is capable of mitigating the vibration or impact to a certain extent and does not easily break, which makes it possible to sufficiently hold the battery cells 11 with the gap filler 13.

### Examples

Hereinafter, the present invention will be described in more detail using examples, but the present invention is not limited to these examples.

In the present invention, the thermally conductive composition and the thermally conductive member are evaluated by the following methods.

### [Viscosity]

The viscosity (Pa·s) at 25°C immediately after the preparation of a thermally conductive composition (immediately after the mixing of a first agent and a second agent described below) was measured using a B-type viscometer (rotary viscometer manufactured by BROOKFIELD, DV-E) at a rotation speed of a spindle (SC4-14) set to 10 rpm.

### [Tensile shear strength]

The tensile shear strength was measured in accordance with the tensile shear test of JIS K 6850: 1999. Two aluminum sheets that were 100 mm in length, 25 mm in width and 2 mm in thickness were prepared and disposed in a state where the front ends of the aluminum sheets overlapped each other in vertical and horizontal lengths of 25 mm × 25 mm, a liquid thermally conductive composition was applied between the aluminum sheets such that the thickness became 1.5 mm and cured by being left to stand in a constant temperature tank of 60°C for 24 hours, thereby producing a test piece. A tensile test was performed under conditions of room temperature of 25°C and a tensile speed of 100 mm/min using a tensile tester (Toyo Seiki Seisaku-sho, Ltd. "STROGRAPH VE50"), thereby measuring the tensile shear strength. In addition, the amount of strain against which the tensile shear strength was maximized was regarded as displacement at the maximum tensile strength.

### [A hardness]

A thermally conductive member was measured with a type A hardness meter of JIS K 6253.

### [Thermal conductivity]

A 20 mm-thick sheet-like piece was cut out from the thermally conductive member, and the thermal conductivity was measured based on ASTM D5470.

### [Examples 1 to 6 and Comparative Examples 1 to 7]

A first agent and a second agent were prepared according to a formulation in Tables 1 to 3, and the first agent and the second agent were mixed in a mass ratio of 1:1, thereby obtaining a thermally conductive composition of each of the examples and the comparative examples. The obtained thermally conductive composition was cured by being left to stand at room temperature of 23°C for 24 hours, thereby obtaining a thermally conductive member.

### [Examples 7 to 10 and Comparative Examples 8 to 12]

A first agent and a second agent were prepared according to a formulation in Tables 1 and 4, and the first agent and the second agent were mixed in a mass ratio of 1:1, thereby obtaining a thermally conductive composition of each of the examples and the comparative examples. The obtained thermally conductive composition was cured by being left to stand at room temperature of 23°C for 24 hours, thereby obtaining a thermally conductive member.

The kind and amount of each curing agent were adjusted such that, compared with Example 4, the proportion of the number of SiH groups in the number of vinyl groups became small in Examples 7 and 8 and large in Examples 9 and 10. The kind and amount of each curing agent were adjusted such that, compared with Comparative Example 1, the proportion of the number of SiH groups in the number of vinyl groups became small in Comparative Examples 8 and 9 and large in Comparative Examples 10 and 11.

**Table 1**

| First agent | | Second agent | |
|---|---|---|---|
| Liquid agent (1) | 100-(a) | Liquid agent (2) | 100-(b) |
| Alkoxysilane compound | (a) | Alkoxysilane compound | (b) |
| Irregular-shaped aluminum hydroxide (average particle diameter: 1 µm) | 140 | Irregular-shaped aluminum hydroxide (average particle diameter: 1 µm) | 140 |
| Spherical alumina (average particle diameter: 3 µm) | 200 | Spherical alumina (average particle diameter: 3 µm) | 200 |
| Spherical alumina (average particle diameter: 70 µm) | 600 | Spherical alumina (average particle diameter: 70 µm) | 600 |

| | | | |
|---|---|---|---|
| * The units of numerical values in Table 1 are "parts by mass." * The liquid agents (1) and (2) are as follows. | | | |

Liquid agent (1): A liquid agent containing a vinyl-terminated organopolysiloxane and a platinum catalyst. The amount of the platinum catalyst was small compared with the amount of the organopolysiloxane, and the amount of the liquid agent (1) is regarded as the amount of the vinyl-terminated organopolysiloxane.

Liquid agent (2): A liquid agent containing a vinyl-terminated organopolysiloxane and a curing agent containing two kinds of organohydrogen polysiloxane having different numbers of Si-H functional groups.

The kind and amount blended of an alkoxysilane compound in each of the examples and the comparative examples is as shown in Tables 2 to 4.

**Table 2**

| | Example 1 | Example 2 | Example 3 | Example 4 | Example 5 | Example 6 | Comparative Example 1 |
|---|---|---|---|---|---|---|---|
| Alkoxysilane compound | 7-Octenyltrimethoxysilane | | | | | | None |
| Amount blended (a) | 2.5 | 5 | 7.5 | 10 | 2.5 | 0 | 0 |
| Amount blended (b) | 0 | 0 | 0 | 0 | 2.5 | 5 | 0 |
| Mass%* | 1.25 | 2.5 | 3.75 | 5 | 2.5 | 2.5 | 0 |
| Viscosity (Pa·s) | 576 | 501 | 472 | 357 | 560 | 500 | 648 |
| Hardness: A hardness | 41 | 40 | 42 | 40 | 41 | 40 | 45 |
| Tensile shear strength (MPa) | 1.5 | 2.4 | 2.1 | 2.0 | 2.3 | 2.3 | 0.21 |
| Displacement at maximum tensile strength (mm) | 3.3 | 3.5 | 3.6 | 3.5 | 3.4 | 3.5 | 2.1 |
| Thermal conductivity (W/(m·K)) | 3.0 | 3.0 | 3.0 | 3.0 | 3.0 | 3.0 | 3.0 |

| | | | | | | | |
|---|---|---|---|---|---|---|---|
| * "Mass%" in Tables 2 to 4 indicates the proportion (mass%) of the alkoxysilane compound in the total amount of the curable organopolysiloxane and the alkoxysilane compound. | | | | | | | |

**Table 3**

| | Comparative Example 2 | Comparative Example 3 | Comparative Example 4 | Comparative Example 5 | Comparative Example 6 | Comparative Example 7 |
|---|---|---|---|---|---|---|
| Alkoxysilane compound | 3-Methacryloxypropyl methyldiethoxysilane | 3-Methacryloxypropyl trimethoxysilane | Vinyltrimethoxysilane | n-Decyltrimethoxysilane | | |
| Amount blended (a) | 5 | 5 | 5 | 5 | 2.5 | 0 |
| Amount blended (b) | 0 | 0 | 0 | 0 | 2.5 | 5 |
| Mass%* | 2.5 | 2.5 | 2.5 | 2.5 | 2.5 | 2.5 |
| Viscosity (Pa·s) | 123 | 137 | 164 | 120 | 188 | 254 |
| Hardness: A hardness | 51 | 50 | 47 | 10 | 10 | 10 |
| Tensile shear strength (MPa) | 0.80 | 0.80 | 0.35 | 0.050 | 0.051 | 0.048 |
| Displacement at maximum tensile strength (mm) | 0.9 | 1.0 | 0.35 | 1.6 | 1.5 | 1.6 |
| Thermal conductivity (W/(m·K)) | 3.0 | 3.0 | 3.0 | 3.0 | 3.0 | 3.0 |

**Table 4**

| | Example 7 | Example 8 | Example 9 | Example 10 | Comparative Example 8 | Comparative Example 9 | Comparative Example 10 | Comparative Example 11 |
|---|---|---|---|---|---|---|---|---|
| Alkoxysilane compound | 7-Octenyltrimethoxysilane | | | | None | | | |
| Amount blended (a) | 10 | 10 | 10 | 10 | 0 | 0 | 0 | 0 |
| Amount blended (b) | 0 | 0 | 0 | 0 | 0 | 0 | 0 | 0 |
| Mass%* | 5 | 5 | 5 | 5 | 0 | 0 | 0 | 0 |
| Viscosity (Pa·s) | 430 | 370 | 330 | 280 | 610 | 590 | 530 | 490 |
| Hardness: A hardness | 25 | 31 | 59 | 78 | 12 | 35 | 68 | 78 |
| Tensile shear strength (MPa) | 1.9 | 2.2 | 2.3 | 2.4 | 0.1 | 0.17 | 0.5 | 0.93 |
| Displacement at maximum tensile strength (mm) | 3.8 | 4.2 | 3.5 | 2.5 | 1.5 | 1.9 | 1.4 | 1.1 |
| Thermal conductivity (W/(m·K)) | 3.0 | 3.0 | 3.0 | 3.0 | 3.0 | 3.0 | 3.0 | 3.0 |

In the above-described examples, the use of the alkoxysilane containing long-chain alkenyl group compound increased the tensile shear strength and increased the displacement amount at the maximum tensile strength. Therefore, the thermally conductive members become displaceable to a certain extent when an external force is applied while ensuring excellent adhesion to an adherend and thus do not easily peel off or the like even when an external force such as vibration is applied.

In contrast, in the comparative examples, since the alkoxysilane containing long-chain alkenyl group compound was not used, both the tensile shear strength and the displacement amount at the maximum tensile strength were insufficient. Therefore, it is not possible to ensure sufficient adhesion to an adherend, and the thermally conductive members easily peel off or the like when an external force such as vibration is applied.

### [Example 11 and Reference Examples 1 and 2]

A first agent and a second agent were prepared and left to stand at normal temperature for one day in the same manner as in Examples 2, 5 and 6. After that, the first agent and the second agent were mixed in a mass ratio of 1:1, thereby obtaining a thermally conductive composition of each of Example 11 and Reference Examples 1 and 2. As a result of attempting to cure the obtained thermally conductive compositions by leaving the thermally conductive compositions to stand at room temperature of 23°C for 24 hours, the thermally conductive composition cured in Example 11; however, in Reference Examples 1 and 2, curing did not proceed sufficiently, and thermally conductive members were not obtained.

As is clear from Example 11 and Reference Examples 1 and 2, it is possible to understand that, in a two-component type, when the alkoxysilane compound (B) and the addition reaction catalyst (X) are contained in the first agent, but not contained in the second agent, the thermally conductive composition cures appropriately even after stored and is excellent in terms of storage stability.

### Reference Signs List

- 10: Battery module

- 11: Battery cell
- 12: Housing of battery module (module housing)
- 13: Gap filler

## Claims

1. A thermally conductive composition comprising:
a curable organopolysiloxane (A);
an alkoxysilane compound (B); and
a thermally conductive filler (C),
wherein the alkoxysilane compound (B) is an alkoxysilane containing long-chain alkenyl group having 8 to 18 carbon atoms.

2. A thermally conductive composition of a two-component type obtained by combining a first agent and a second agent,
wherein the first agent comprises an alkenyl group-containing organopolysiloxane (A1), an alkoxysilane compound (B), and an addition reaction catalyst (X),
the second agent comprises a hydrogen organopolysiloxane (A2), but comprises no alkoxysilane compound (B),
at least any one of the first agent and the second agent comprises a thermally conductive filler (C), and
the alkoxysilane compound (B) is an alkoxysilane containing long-chain alkenyl group having 8 to 18 carbon atoms.

3. The thermally conductive composition according to claim 2, wherein the second agent comprises the alkenyl group-containing organopolysiloxane (A1).

4. The thermally conductive composition according to claim 1, wherein the curable organopolysiloxane (A) is an addition reaction curable organopolysiloxane.

5. The thermally conductive composition according to any one of claims 1 to 4, wherein a cured product of the thermally conductive composition has a hardness of 30 or higher and lower than 60 in terms of A hardness.

6. The thermally conductive composition according to any one of claims 1 to 5, wherein the alkoxysilane compound (B) is octenyltrimethoxysilane.

7. The thermally conductive composition according to any one of claims 1 to 6, wherein a content of the alkoxysilane compound (B) is 1 to 10 mass% with respect to a total mass of the curable organopolysiloxane (A) and the alkoxysilane compound (B).

8. The thermally conductive composition according to any one of claims 1 to 7, wherein a tensile shear strength is 1 MPa or higher when the thermally conductive composition has been cured.

9. A thermally conductive member obtained by curing the thermally conductive composition according to any one of claims 1 to 8.

10. A battery module comprising:
a gap filler that is the thermally conductive member according to claim 9;
a plurality of battery cells; and
a module housing configured to store the plurality of battery cells,
wherein the gap filler is disposed within the module housing.
